# EUROPÄISCHE PATENTSCHRIFT

(11) **EP 2 869 685 B1**
(45) Veröffentlichungstag und Bekanntmachung des Hinweises auf die Patenterteilung: **07.03.2018**
(21) Anmeldenummer: 13753532.4
(22) Anmeldetag: 09.07.2013
(51) Int. Cl.: A01B 71/04, F16C 33/78, F16C 19/16, F16C 19/18

(54) **LAGEREINHEIT FÜR EIN DOPPELSCHEIBENSCHAR**
BEARING UNIT FOR A DOUBLE DISC COULTER
UNITÉ PALIER POUR SOC À DOUBLE DISQUE

(30) Priorität: 09.07.2012 DE 102012013686
(43) Veröffentlichungstag der Anmeldung: 13.05.2015
(73) Patentinhaber: Lemken GmbH & Co. KG, 46519 Alpen (DE)
(72) Erfinder: GEBBEKEN, Martin, 46519 Alpen (DE); WERRIES, Dieter, 46519 Alpen (DE); PAESSENS, Christian, 47661 Issum (DE); LUKAS, Thomas, 48683 Ahaus Wülfen (DE); BERENDSEN, Mark, 7044 AJ Lengel (NL); GOTZEN, Christian, 41751 Viersen (DE); GERAATS, Marcel, 41334 Nettetal (DE)
(74) Vertreter: Schulte & Schulte
(86) Internationale Anmeldenummer: PCT/DE2013/000371
(87) Internationale Veröffentlichungsnummer: WO 2014/008882

(56) Entgegenhaltungen:
- EP-A2- 0 889 254
- WO-A1-02/19791
- WO-A1-2007/093534
- WO-A1-2010/124731
- DE-A1-102008 051 065

## Beschreibung

Die Erfindung bezieht sich auf eine Lagereinheit für ein Doppelscheibenschar gemäß dem Oberbegriff der Patentansprüche 1 und 10.

Derartige Lagereinheiten werden auch bei Scheibenscharen eingesetzt und sind aufgrund der Staubentwicklung besonders hoch beansprucht und müssen daher besonders gut gegen Schmutz geschützt sein. Insbesondere bei pneumatischen Drillmaschinen und auch Düngescharen sind die Lagereinheiten besonders hoch beansprucht, weil zusätzlich Staub aufgewirbelt wird und auch Beize oder Dünger die Lagereinheiten erreichen kann. Die Dichtungen sind dementsprechend ausgelegt bzw. es werden mehrere Dichtungen oder Kassettendichtungen eingesetzt, die den Weg des eindringenden Staubes bis zu den Kugeln und Laufbahnen der Lagereinheit äußerst lang gestalten. Diese Abdichtungen benötigen einen breiten Bauraum, der insbesondere bei engen seitlichen Abständen der Scheibenschare den Freiraum erheblich verkleinern, was häufig zu Verstopfungen führt. Aus der WO 2010/124731 A1 ist eine Lagereinheit bekannt, die als geeignet für ein Doppelscheibenschar mit V-förmig zueinander angeordneten Scheibenscharen angesehen werden kann. Diese umfasst eine einfache Dichtung auf der dem Befestigungsflansch des Außenrings gegenüber liegenden Seite zwischen dem Innen- und dem Außenring.

Aufgabe der Erfindung ist es, eine Lagereinheit für ein Doppelscheibenschar zu schaffen, die eine besonders gute Abdichtung beinhaltet, wenig Bauraum benötigt und so auch bei engen Reihenabständen der Scheibenschare einen ausreichenden Freiraum zwischen den einzelnen Scheibenscharen sicherstellt.

Erfindungsgemäß wird die Aufgabe nach den Merkmalen des Anspruchs 1 gelöst, wobei in den weiteren Patentansprüchen in vorteilhafter Weise ergänzende und alternative Lösungen beansprucht werden.

Durch das Vorsehen einer doppelten Dichtung zwischen dem Innenring und dem Außenring bzw. auf der äußeren Ringbahn des Außenrings wird der Weg von eintretendem Schmutz bis zu den Kugeln deutlich verlängert, ohne den Abstand zwischen den Scheibenscharen erhöhen zu müssen. Dieses mehrstufige Dichtungssystem macht vor allem in axialer Richtung der Lagereinheit keinen zusätzlichen Bauraum erforderlich.

Eine vorteilhafte Ausführung der Erfindung ist die, bei der die dem Befestigungsflansch abgewandte äußere Kante der zweiten, zusätzlichen Dichtung ungefähr den gleichen Abstand zum Befestigungsflansch des Scheibenschars aufweist wie die äußere Kante der Dichtung, die auf der inneren Ringbahn des Außenrings angeordnet ist. Die bereits vorhandene Dichtung zwischen Außenring und Innenring bestimmt den erforderlichen Bauraum der Lagereinheit in axialer Richtung. Dadurch dass die äußere Kante der zweiten Dichtung etwa den gleichen Abstand zum Befestigungsflansch des Scheibenschars aufweist, wird trotz der zusätzlichen Dichtung der erforderliche Bauraum in axialer Richtung nicht erhöht.

Vorgesehen ist außerdem, dass der Innenring über die Achse mit dem Scharträger des Scheibenschars und der Außenring über den Befestigungsflansch mit dem Scheibenschar verbunden ist.

Eine besonders effektive Dichtung ist gegeben, wenn die erste Dichtung in dem durch den Innenring, den Außenring sowie die Schutzkappe und den Käfig gebildeten Zwischenraum angeordnet ist. D. h. die Dichtung sitzt innerhalb dieses Zwischenraums, begrenzt durch Innen- und Außenring andererseits und Schutzkappe und Käfig bzw. Kugeln andererseits, als erste Komponente der mehrstufigen Dichtung.

Alternativ oder ergänzend hierzu ist vorgesehen, dass die zweite Dichtung in dem durch den Außenring und die Schutzkappe gebildeten Zwischenraum angeordnet ist. Sie befindet sich dann in etwa in einer Verlängerung der Bohrung zur Aufnahme einer zur Befestigung von Scheibenschar und Lagereinheit dienenden Schraube und füllt diesen Raum zweckmäßigerweise auch aus. Dank dieser mehrstufigen Dichtung kann eine besonders kompakte Lagereinheit mit geringer Bauraumbreite realisiert werden.

Um einen passgenauen Sitz der jeweiligen Dichtungen zu ermöglichen, ist vorgesehen, dass die Dichtung in einem Klemmsitz zwischen Innenring und Außenring bzw. Außenring und Schutzkappe positioniert ist, wodurch der Dichtung ihr Platz vorgegeben und diese zugleich in ihrer Position gehalten ist. Außenring und/oder Innenring für die erste Dichtung sehen dazu eine Ausnehmung bzw. einen Vorsprung in dem Zwischenraum vor, welche der Dichtung ihren passgenauen Sitz vorgibt bzw. diesen begrenzt. In Hinblick auf die zweite Dichtung zwischen Außenring und Schutzkappe ist diese Ausnehmung bzw. dieser Vorsprung in dem Außenring und/oder der Schutzkappe vorgesehen.

Erfindungsgemäß ist auch daran gedacht, dass zwischen der äußeren Ringbahn und der Schutzkappe mindestens zwei zusätzliche Dichtungen angeordnet sind, die in Achsrichtung der Achse hintereinander angeordnet sind. Durch das Vorsehen mehrerer zusätzlicher Dichtungen zwischen der äußeren Ringbahn und dem Außengehäuse wird der angesprochene Weg noch zusätzlich verlängert, was den Effekt der Abdichtung der Lagereinheit noch deutlich verbessert. Auch diese Lösung vergrößert den angesprochenen erforderlichen Bauraum in Achsrichtung der Achse nicht.

Die Erfindung sieht weiter vor, dass der Innenring zweiteilig ausgebildet ist und aus einem ersten Innenring und einem zweiten Innenring besteht und sich die Teilebene bei einem einreihigen Kugellager in der Mitte der Laufbahn der Kugeln befindet. Diese Ausführungsform ermöglicht einen spielfreien Einsatz der Lagereinheit, die dank des geteilten Innenrings auch vorgespannt eingesetzt werden kann.

Eine weitere Ausführungsform der Erfindung ist die, bei welcher der Innenring zweiteilig ausgebildet ist und sich die Teilebene bei einem zweireihigen Kugellager zwischen den Laufbahnen der beiden Kugelreihen befindet.

Die eingangs gestellte Aufgabe kann außerdem dadurch gelöst werden, dass eine erste Dichtung auf der dem Befestigungsflansch gegenüber liegenden Seite zwischen dem Innenring und dem Außenring angeordnet ist und dass eine zweite Dichtung auf der dem Befestigungsflansch gegenüber liegenden Seite zwischen Außenring und Schutzkappe auf der inneren Ringbahn des Außenringes angeordnet ist.

Bei dieser Ausführungsform sind zwei Dichtungen als eine Art Dichtungspaket hintereinander positioniert, um eine Dichtung zwischen Innenring und Außenring einerseits und zwischen Außenring und Schutzkappe andererseits zu gewährleisten. Dabei sitzt, aus Richtung Kugel bzw. Käfig betrachtet, eine erste, innere Dichtung zwischen Innen- und Außenring und eine zweite, äußere Dichtung zwischen Außenring und Schutzkappe. Zum Überbrücken der Abstände zwischen Innen- und Außenring bzw. zur Stabilisierung der aus einem flexiblen Material gebildeten Dichtungen können Spangen aus Metall dienen, die mit der Dichtung eine gemeinsame Baueinheit bilden.

Weitere Einzelheiten der Erfindung sind den Figuren und der Figurenbeschreibung zu entnehmen.

Es zeigen:
Figur 1 eine Lagereinheit mit einreihigem Kugellager und geteiltem Innenring und
Figur 2 eine Lagereinheit mit zweireihigem Kugellager und geteiltem Innenring.

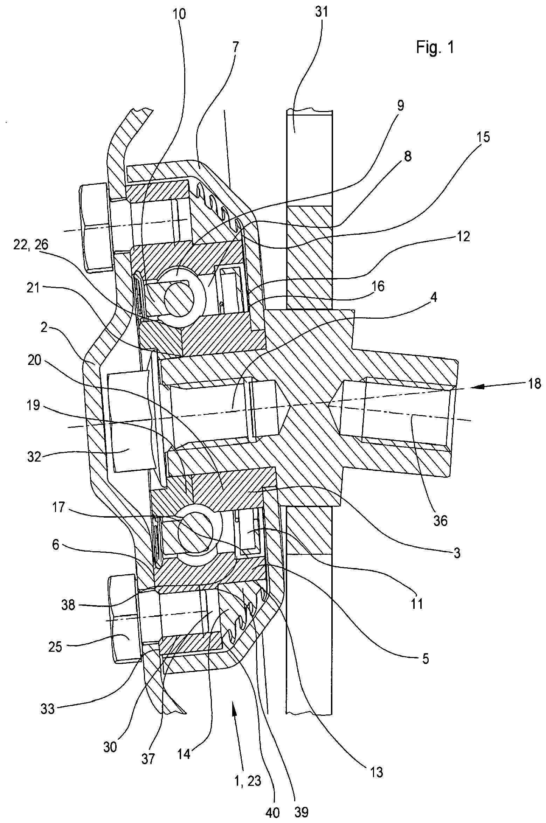

Figur 1 zeigt eine Lagereinheit 1 für ein Doppelscheibenschar. Von diesem ist in der Darstellung nach Figur 1 der besseren Übersichtlichkeit halber nur das linke, in der Achse 4 sitzende Scheibenschar 2 gezeigt. Mit dem zweiten, hier nicht dargestellten, in der Achse 36 sitzenden Schar bildet diesen ein V-förmiges Doppelscheibenschar mit jeweiliger Lagereinheit. Das Schar 2 weist ein einreihiges Kugellager 23 und einen geteilten Innenring 3 auf. Denkbar ist auch, anstatt eines geteilten Innenrings 3 einen geteilten Außenring 5 einzusetzen. Der Innenring 3 besteht hier aus dem ersten Innenring 19 und dem zweiten Innenring 20. Die Teilebene 21 des geteilten Innenrings 3 befindet sich bei diesem einreihigen Kugellager 23 in der Mitte 22 der Laufbahn 26 der Kugeln 9. Der Außenring 5 beinhaltet den Befestigungsflansch 6 für die Befestigung des Doppelscheibenschars 2. Im Zwischenraum 8 des Innenrings 3 und des Außenrings 5 befinden sich die Kugeln 9 nebst Käfig 10 der Lagereinheit 1. Der Befestigungsflansch 6 weist Gewindebohrungen 30 für die Aufnahme der Befestigungsschrauben 25 auf, mit denen das Scheibenschar 2 mit der Lagereinheit 1 befestigt wird. Denkbar sind auch Schnellbefestigungssysteme mit einer Schraube oder Mutter oder mit Stecksystemen, mit denen das Scheibenschar 2 mit der Lagereinheit 1 schnell verbunden werden kann. Vom Scheibenschar 2 ist hier nur der Teil dargestellt, der mit dem Flansch 6 des Außenrings 5 verbunden wird. Die Lagereinheit 1 nebst Scheibenschar 2 ist hier mittels der Schraube 32 mit dem Scharträger 31 verbunden. Zwischen dem Innenring 3 bzw. dem zweiten Innenring 20 und dem Außenring 5 befindet sich auf der Seite 12, die dem Befestigungsflansch 6 gegenüber liegt, die erste Dichtung 11. Sie ist auf der inneren Ringbahn 17 angeordnet. Der Außenring 5 ist auf der Seite 12 für die Aufnahme der zweiten, zusätzlichen Dichtung 14 abgesetzt. Die zusätzliche Dichtung 14 befindet sich zwischen der äußeren Ringbahn 13 und der Schutzkappe 7. Die äußere Kante 15 der zusätzlichen Dichtung 14 weist ungefähr den gleichen Abstand zum Befestigungsflansch 6 des Außenrings 5 auf wie die äußere, dem Befestigungsflansch 6 abgewandete Kante 16 der ersten Dichtung 11. In diesem Fall handelt es sich bei der zusätzlichen Dichtung 14 um eine Art Axialwellendichtring. Dabei ist die erste, innere Dichtung 11 in dem Zwischenraum 8 angeordnet, der sich zwischen Innenring 3, Außenring 5, Schutzkappe 7 und Käfig 10 bzw. Kugel 9 erstreckt, sodass eine besonders gezielte Dichtung möglich ist. Dies ist insbesondere der Fall bei einem Klemmsitz für diese Dichtung 11, wozu hier ein Vorsprung 38 in dem Außenring 5 vorgesehen ist. Die doppelte Dichtung wird dann durch die zweite, äußere Dichtung 14 geschaffen, die in dem Zwischenraum 37 angeordnet ist. Letzterer ist gebildet durch den Außenring 5 und die Schutzkappe 7, wobei die Dichtung 14 in der Verlängerung der Schraube 25 zur Befestigung von Scheibenschar 2 und Lagereinheit 1 sitzt und den Zwischenraum 37 vollständig ausfüllt. Die beiden durch die Gewindebohrung 30 gebildeten Absätze 39 und 40 bieten dauerhaft festen Sitz der Dichtung 14 in dem Zwischenraum 37. Andere Dichtungsarten können an gleicher Stelle ebenfalls eingesetzt werden, ohne den kompakten Aufbau der Lagereinheit 1 negativ zu beeinflussen. In Achsrichtung 18 der Achse 4 des Scheibenträgers 31 wird dadurch die Breite der Lagereinheit 1 nicht zusätzlich vergrößert. Eine Dichtung 33 befindet sich zwischen dem Scheibenschar 2 und dem Befestigungsfalsch 6 des Außenrings 5 und verhindert so das Eindringen von Schmutz in den Zwischenraum 8 der Lagereinheit 1 auf der Seite des Befestigungsflansches 6. Diese Dichtung 33 kann wie in Fig. 1 als Flachdichtung, alternativ auch als O-Ring ausgebildet oder in die Dichtung 16 integriert sein. Auch der Einsatz einer dauerelastischen Dichtungsmasse ist denkbar.

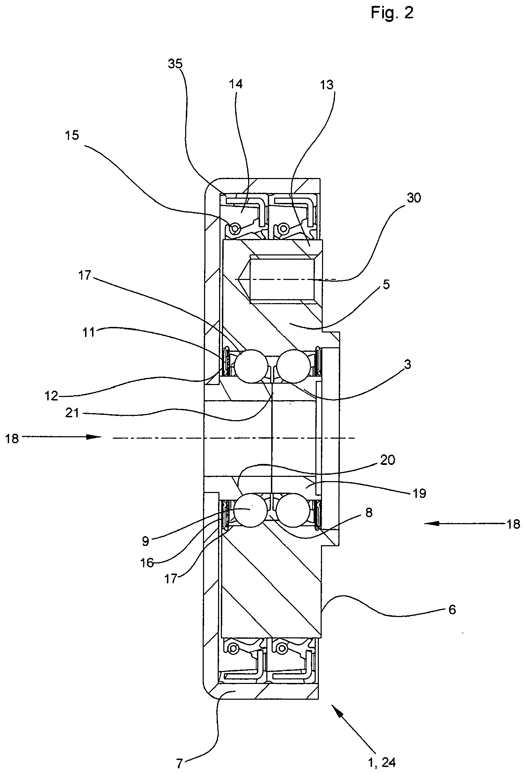

Fig 2 zeigt eine Lagereinheit 1 mit zweireihigem Kugellager 24 und geteiltem Innenring 3. Denkbar ist auch, anstatt eines geteilten Innenrings 3 einen geteilten Außenring 5 einzusetzen. Der Innenring 3 besteht aus dem ersten Innenring 19 und dem zweiten Innenring 20. Die Teilebene 21 des geteilten Innenrings 3 befindet sich bei diesem zweireihigen Kugellager 24 zwischen den beiden Laufbahnen der beiden Kugelreihen der Kugeln 9. Der Außenring 5 beinhaltet den Befestigungsflansch 6 für die Befestigung des Scheibenschars. Im Zwischenraum 8 zwischen dem Innenring 3 und dem Außenring 5 befinden sich die Kugeln 9. Der Befestigungsflansch 6 weist Gewindebohrungen 30 für die Aufnahme der Befestigungsschrauben auf, mit denen das nicht dargestellte Scheibenschar mit der Lagereinheit 1 befestigt wird. Zwischen dem Innenring 3 bzw. dem zweiten Innenring 20 und dem Außenring 5 ist auf der Seite 12, die dem Befestigungsflansch 6 gegenüber liegt, die Dichtung 11 auf der inneren Ringbahn 17 angeordnet. Zwischen der äußeren Ringbahn 13 des Außenrings 5 und der Schutzkappe 7 befinden sich die zusätzlichen Dichtungen 14, die nebeneinander angeordnet sind. In diesem Fall handelt es sich bei den zusätzlichen Dichtungen 14 um Radialwellendichtungen. Andere Dichtungsarten können an gleicher Stelle ebenfalls eingesetzt werden, ohne den kompakten Aufbau der Lagereinheit 1 negativ zu beeinflussen. Die äußere Kante 15 der äußeren zusätzlichen Dichtung 35, 14 weist ungefähr den gleichen Abstand zum Befestigungsflansch 6 des Außenrings 5 auf wie die äußere Kante 16 der Dichtung 11. In Achsrichtung 18 der Achse 4 des Scheibenträgers 31 wird dadurch die Breite der Lagereinheit 1 nicht zusätzlich vergrößert. Ein Press- oder Klemmsitz zur zusätzlichen Sicherung der Position der Dichtungen 14 könnte der Schutzkappe 7 an ihrer Innenseite und/oder dem Außenring 5 auf der äußeren Ringbahn 13 zugeordnet sein.

## Patentansprüche

1. Lagereinheit (1) für ein Doppelscheibenschar mit V-förmig zueinander angeordneten Scheibenscharen (2), welche mindestens aus einem Innenring (3) für die Aufnahme einer Achse (4), einem Außenring (5) mit Befestigungsflansch (6) für das Scheibenschar (2) und einer Schutzkappe (7) besteht, wobei im Zwischenraum (8) zwischen dem Innenring (3) und dem Außenring (5) Kugeln (9) oder Rollen mit Käfig (10) angeordnet sind, wobei eine erste Dichtung auf der dem Befestigungsflansch gegenüber liegenden Seite zwischen dem Innenring und dem Außenring angeordnet ist,
**dadurch gekennzeichnet,**
**dass** eine zweite Dichtung (14) auf der dem Befestigungsflansch (6) gegenüber liegenden Seite (12) zwischen Außenring (5) und Schutzkappe (7) auf der äußeren Ringbahn (13) des Außenringes (5) angeordnet ist.

2. Lagereinheit nach Anspruch 1,
**dadurch gekennzeichnet,**
**dass** die dem Befestigungsflansch (16) abgewandte äußere Kante (15) der zusätzlichen Dichtung (14) ungefähr den gleichen Abstand zum Befestigungsflansch (6) des Scheibenschars (2) aufweist wie die äußere, auf der inneren Ringbahn (17) des Außenrings (5) angeordnete Kante (16) der Dichtung (11).

3. Lagereinheit nach Anspruch 1,
**dadurch gekennzeichnet,**
**dass** der Innenring (3) über die Achse (4) mit dem Scharträger (31) des Scheibenschars (2) und der Außenring (5) über den Befestigungsflansch (6) mit dem Scheibenschar (2) verbunden ist.

4. Lagereinheit nach Anspruch 1,
**dadurch gekennzeichnet,**
**dass** die erste Dichtung (11) in dem durch den Innenring (3), den Außenring (5) sowie die Schutzkappe (7) und den Käfig (10) gebildeten Zwischenraum (8) angeordnet ist.

5. Lagereinheit nach Anspruch 1,
**dadurch gekennzeichnet,**
**dass** die zweite Dichtung (14) in dem durch den Außenring (5) und die Schutzkappe (7) gebildeten Zwischenraum (37) angeordnet ist.

6. Lagereinheit nach Anspruch 4 oder 5,
**dadurch gekennzeichnet,**
**dass** die Dichtung (11, 14) in einem Klemmsitz zwischen Innenring (3) und Außenring (5) bzw. Außenring (5) und Schutzkappe (7) positioniert ist.

7. Lagereinheit nach Anspruch 1,
**dadurch gekennzeichnet,**
**dass** zwischen der äußeren Ringbahn (13) und der Schutzkappe (7) mindestens zwei zusätzliche Dichtungen (14) angeordnet sind, die in Achsrichtung (18) der Achse (4) hintereinander angeordnet sind.

8. Lagereinheit nach Anspruch 1,
**dadurch gekennzeichnet,**
**dass** der Innenring (3) zweiteilig ausgebildet ist und aus einem ersten Innenring (19) und einem zweiten Innenring (20) besteht und sich die Teilebene (21) bei einem einreihigen Kugellager (23) in der Mitte der Laufbahn (22) der Kugeln (9) befindet.

9. Lagereinheit nach Anspruch 8,
**dadurch gekennzeichnet,**
**dass** der Innenring (3) zweiteilig ausgebildet ist und sich die Teilebene (21) bei einem zweireihigen Kugellager (24) zwischen den Laufbahnen der beiden Kugelreihen befindet.

10. Lagereinheit (1) für ein Doppelscheibenschar mit V-förmig zueinander angeordneten Scheibenscharen (2), welche mindestens aus einem Innenring (3) für die Aufnahme einer Achse (4), einem Außenring (5) mit Befestigungsflansch (6) für das Scheibenschar (2) und einer Schutzkappe (7) besteht, wobei im Zwischenraum (8) zwischen dem Innenring (3) und dem Außenring (5) Kugeln (9) oder Rollen mit Käfig (10) angeordnet sind, wobei eine erste Dichtung auf der dem Befestigungsflansch gegenüber liegenden Seite zwischen dem Innenring und dem Außenring angeordnet ist,
**dadurch gekennzeichnet,**
**dass** eine zweite Dichtung (14) auf der dem Befestigungsflansch (6) gegenüber liegenden Seite (12) zwischen Außenring (5) und Schutzkappe (7) auf der inneren Ringbahn (17) des Außenringes (5) angeordnet ist.

## Claims

1. Bearing unit (1) for a double disc coulter with disc coulters (2) arranged in a V-shape to one another, which as a minimum consist of an inner ring (3) for the receiving of an axis (4), an outer ring (5) with mounting flange (6) for the disc coulter (2) and a protective cap (7), whereby balls (9) or rollers with cage (10) are arranged in the gap (8) between the inner ring (3) and the outer ring (5), wherein a first seal is arranged between the inner ring and the outer ring on the side opposite the mounting flange,
**characterised in that**
a second seal (14) is arranged, on the side (12) opposite the mounting flange (6), between the outer ring (5) and protective cap (7) on the external ring race (13) of the outer ring (5).

2. Bearing unit according to claim 1,
**characterised in that**
the outer edge (15), facing away from the mounting flange (16), of the additional seal (14), has approximately the same distance to the mounting flange (6) of the disc coulter (2) as the outer edge (16), arranged on the inner ring race (17) of the outer ring (5), of the seal (11).

3. Bearing unit according to claim 1,
**characterised in that**
the inner ring (3) is connected with the coulter carrier (31) of the disc coulter (2) via the axle (4) and the outer ring (5) is connected with the disc coulter (2) via the mounting flange (6).

4. Bearing unit according to claim 1,
**characterised in that**
the first seal (11) is arranged in the gap (8) formed by the inner ring (3), the outer ring (5) as well as the protective cap (7) and the cage (10).

5. Bearing unit according to claim 1,
**characterised in that**
the second seal (14) is arranged in the gap (37) formed by the outer ring (5) and the protective cap (7).

6. Bearing unit according to claim 4 or 5,
**characterised in that**
the seal (11, 14) is positioned in a force fit between the inner ring (3) and outer ring (5) or the outer ring (5) and protective cap (7).

7. Bearing unit according to claim 1,
**characterised in that**
at least two additional seals (14) are arranged between the outer ring race (13) and the protective cap (7), which are arranged one behind the other in the axial direction (18) of the axis (4).

8. Bearing unit according to claim 1,
**characterised in that**
the inner ring (3) is designed as a two-piece ring and consists of a first inner ring (19) and a second inner ring (20), and that the part level (21) is located in the centre of the race (22) of the balls (9) in the case of a single-row ball bearing (23).

9. Bearing unit according to claim 8,
**characterised in that**
the inner ring (3) is designed as a two-piece ring and the partition plane (21) is located between the races of the two ball rows in the case of a double-row ball bearing (24).

10. Bearing unit (1) for a double disc coulter with disc coulters (2) arranged in a V-shape to one another, which as a minimum consist of an inner ring (3) for the receiving of an axis (4), an outer ring (5) with mounting flange (6) for the disc coulter (2) and a protective cap (7), whereby balls (9) or rollers with cage (10) are arranged in the gap (8) between the inner ring (3) and the outer ring (5), wherein a first seal (11) is arranged between the inner ring (3) and the outer ring (5) on the side (12) opposite the mounting flange (6),
**characterised in that**
a second seal (14) is arranged, on the side (12) opposite the mounting flange (6), between the outer ring (5) and protective cap (7) on the internal ring race (17) of the outer ring (5).

## Revendications

1. Unité de palier (1) pour un soc à double disque avec des socs à disque (2) disposés en V les uns par rapport aux autres, qui se compose au moins d'une bague intérieure (3) pour la réception d'un axe (4), d'une bague extérieure (5) avec bride de fixation (6) pour le soc à disque (2) et d'un couvercle de protection (7), des billes (9) ou des rouleaux avec cage (10) étant disposés dans l'espace intermédiaire (8) entre la bague intérieure (3) et la bague extérieure (5), un premier joint d'étanchéité étant disposé sur le côté situé en face de la bride de fixation entre la bague intérieure et la bague extérieure,
**caractérisée en ce**
**qu'**un deuxième joint d'étanchéité (14) est disposé sur le côté (12) situé en face de la bride de fixation (6) entre la bague extérieure (5) et le couvercle de protection (7) sur la piste annulaire (13) extérieure de la bague extérieure (5).

2. Unité de palier selon la revendication 1,
**caractérisée en ce que**
l'arête (15) extérieure du joint d'étanchéité (14) supplémentaire qui est éloignée de la bride de fixation (16) présente à peu près la même distance à la bride de fixation (6) du soc à disque (2) que l'arête (16) extérieure du joint d'étanchéité (11) disposée sur la piste circulaire (17) intérieure de la bague extérieure (5).

3. Unité de palier selon la revendication 1,
**caractérisée en ce que**
la bague intérieure (3) est raccordée au support de soc (31) du soc à disque (2) par le biais de l'axe (4), et la bague extérieure (5) est raccordée au soc à disque (2) par le biais de la bride de fixation (6).

4. Unité de palier selon la revendication 1,
**caractérisée en ce que**
le premier joint d'étanchéité (11) est disposé dans l'espace intermédiaire (8) formé par la bague intérieure (3), la bague extérieure (5) ainsi que par le couvercle de 30 protection (7) et la cage (10).

5. Unité de palier selon la revendication 1,
**caractérisée en ce que**
le deuxième joint d'étanchéité (14) est disposé dans l'espace intermédiaire (37) formé par la bague extérieure (5) et par le couvercle de protection (7).

6. Unité de palier selon la revendication 4 ou 5,
**caractérisée en ce que**
le joint d'étanchéité (11, 14) est positionné dans un siège de serrage entre la bague intérieure (3) et la bague extérieure (5) ou respectivement la bague extérieure (5) et le couvercle de protection (7).

7. Unité de palier selon la revendication 1,
**caractérisée en ce que,**
entre la piste annulaire (13) extérieure et le couvercle de protection (7), il est disposé au moins deux joints d'étanchéité (14) supplémentaires qui sont disposés l'un derrière l'autre dans la direction axiale (18) de l'axe (4).

8. Unité de palier selon la revendication 1,
**caractérisée en ce que**
la bague intérieure (3) est constituée en deux parties et se compose d'une première bague intérieure (19) et d'une deuxième bague intérieure (20), et **en ce que** le plan partiel (21) se trouve, en présence d'un roulement à billes (23) à une rangée, au milieu de la voie de roulement (22) des billes (9).

9. Unité de palier selon la revendication 8,
**caractérisée en ce que**
la bague intérieure (3) est constituée en deux parties, et le plan partiel (21) se trouve, en présence d'un roulement à billes (24) à deux rangées, entre les voies de roulement des deux rangées de billes.

10. Unité de palier (1) pour un soc à double disque avec des socs à disque (2) disposés en V les uns par rapport aux autres, qui se compose au moins d'une bague intérieure (3) pour la réception d'un axe (4), d'une bague extérieure (5) avec bride de fixation (6) pour le soc à disque (2) et d'un couvercle de protection (7), des billes (9) ou des rouleaux avec cage (10) étant disposés dans l'espace intermédiaire (8) entre la bague intérieure (3) et la bague extérieure (5), un premier joint d'étanchéité étant disposé sur le côté situé en face de la bride de fixation entre la bague intérieure et la bague extérieure,
**caractérisée en ce**
**qu'**un deuxième joint d'étanchéité (14) est disposé sur le côté (12) situé en face de la bride de fixation (6) entre la bague extérieure (5) et le couvercle de protection (7) sur la piste annulaire (17) intérieure de la bague extérieure (5).
